# EUROPEAN PATENT SPECIFICATION

(11) **EP 2 981 448 B1**
(45) Date of publication and mention of the grant of the patent: **19.09.2018**
(21) Application number: 14779370.7
(22) Date of filing: 31.03.2014
(51) Int. Cl.: B62D 7/14

(54) **SYSTEM FOR STEERING A TAG AXLE OF A VEHICLE**
SYSTEM ZUR LENKUNG EINER NACHLAUFACHSE EINES FAHRZEUGS
SYSTÈME PERMETTANT DE DIRIGER UN ESSIEU TRAÎNÉ D'UN VÉHICULE

(30) Priority: 02.04.2013 SE 1350410
(43) Date of publication of application: 10.02.2016
(73) Proprietor: Scania CV AB, 151 87 Södertälje (SE)
(72) Inventor: LUNDGREN, Emil, S-120 65 Stockholm (SE)
(74) Representative: Scania CV AB
(86) International application number: PCT/SE2014/050382
(87) International publication number: WO 2014/163560

(56) References cited:
- EP-A1- 1 215 104
- WO-A1-97/26170
- WO-A1-97/26170
- WO-A2-2011/081522
- DE-A1- 10 245 618
- DE-A1-102010 027 118
- US-A- 5 099 939
- US-A- 5 449 186
- US-A1- 2008 073 867
- US-A1- 2009 133 954
- US-B1- 6 450 285

## Description

### FIELD OF THE INVENTION AND PRIOR ART

The present invention relates to a system according to the preamble of the attached claim 1 for steering at least one unpowered wheeled tag axle of a vehicle which in the latter's ordinary direction of movement follows after its front axle, and to a method according to the preamble of the attached independent method claim.

Such a steered tag axle may be placed in any desired order among a vehicle's wheeled axles, other than the first, in the vehicle's ordinary direction of movement, and the vehicle may also have two or more such steered tag axles. A steered tag axle usually comes ahead of and/or behind a powered axle of the vehicle but may also be part of a trailer vehicle which has no powered axle.

Vehicles provided with steered tag axles are usually heavy vehicles, e.g. trucks and buses, which is therefore the application of the invention described below in order to explain, but in no way limit, the invention.

It may be useful and advantageous that such a tag axle be steerable at low vehicle speeds in order to increase the vehicle's manoeuvrability, e.g. when a milk vehicle has to drive into a farm or the like or when buses have to perform delicate manoeuvres in urban traffic, e.g. in narrow streets. However, it is desirable for stability and fuel consumption reasons that the tag axle be unsteered at higher vehicle speeds at which the system will therefore ensure that the tag axle's wheels assume a fixed neutral position aligned with the vehicle's longitudinal direction. For this reason, the tag axle's wheels will be steered in accordance with the steering of the front axle's wheels and taking the vehicle's speed into account, so that the deflection of the tag axle's wheels relative to that of the front axle's wheels normally decreases with increasing speed of the vehicle, until it reaches zero at a threshold speed at which the locking to the neutral position occurs.

Should any malfunction occur in a steering system of this kind, e.g. loss of electricity supply to the whole or parts of the system or failure of some component of the system, such a system has, irrespective of the vehicle's speed, to switch to a fail-safe state in which the tag axle's wheels should preferably be locked in said neutral position. For this reason such a system is provided with an arrangement for responding to the occurrence of malfunctions within the system by switching the system to a fail-safe state with inactivated device.

A system of the kind defined in the introduction is previously known from EP 1 215 104 B1 which describes a system in an embodiment in which a fail-safe state is reached by disconnection of the tag axle's steering irrespective of the vehicle's speed. In another embodiment there is an extra safety steering circuit which responds to malfunctions in the ordinary circuit either by centering the tag axle's wheels or by continuing to steer them. The system described in that specification is relatively complicated and therefore expensive and it is therefore desirable to develop a simpler reliable system for safe operation even after the occurrence of malfunctions.

Further, WO 97/26170 A1 discloses a control system for a steerable axle of a vehicle. The system in WO 97/26170 A1 has a first sensor for outputting a first control signal representative of the amount of steer of a first steerable axle and a second sensor for outputting a second control signal representative of the amount of steer of a second steerable axle. Drive means controls steering of the second steerable axle in proportion to the amount of steer of the first steerable axle in accordance with the first and second control signals.

### SUMMARY OF THE INVENTION

The object of the present invention is to propose a system of the kind defined in the introduction which is improved in at least one respect relative to previous known such systems.

This object is achieved according to the invention by providing such a system with the features set out in the characterising part of the attached claim 1.

The fact that two fail-safe states can be reached and the speed of the vehicle decides which of them the system switches to in response to malfunctions of the tag axle steering system results in very safe vehicle behaviour. When malfunctions occur it is desirable that the tag axle's wheels be locked in alignment with the vehicle's longitudinal direction, which is catered for by the second fail-safe state in cases where the vehicle's speed when the malfunction occurs is higher than said threshold speed and this alignment already prevails, but when the vehicle's speed is lower and the alignment may differ from the neutral position the tag axle will not be locked upon the occurrence of a malfunction but will instead be allowed to be caster-steered in the first fail-safe state, resulting in significantly better behaviour of the vehicle than by the tag axle being locked in an incorrect position, i.e. at an angle other than zero degrees relative to the vehicle's longitudinal direction. By the connection in series of the two valve means on the alternative feedback line for conveying pressure medium to its reservoir, the pressure medium circuit is controlled in such a way as to easily and reliably reach the two fail-safe states.

In one embodiment of the invention said second facilities comprise spring means adapted to constantly urging the valve of the second valve means towards the open position by spring loading, and holding means adapted, when the system is operating, to counteracting said spring loading and keeping the valve of the second valve means in a closed position but to responding to the occurrence of malfunctions by ceasing to resist the spring loading so that the valve of the second valve is switched by spring force to a stable open position. The operation of the second valve means to reach the first fail-safe state in response to malfunctions which occur when the vehicle is below the threshold speed thus becomes very safe in that the valve of this valve means will automatically be moved to and kept in the open position by said spring means as soon as the holding means ceases to resist this, and in one embodiment the holding means is an electrical power means, e.g. an electromagnetic valve, adapted, when in an energised state, to keeping the valve of the second valve means in a closed position and, when in a de-energised state, to allowing the spring means to switch the valve of the second valve means to an open position. When a malfunction of the system occurs, the energisation of the electrical power means is thus removed or drops out because of the malfunction, so that this power means becomes de-energised, thus automatically reaching said open position required for reaching the first fail-safe state when the vehicle is below the threshold speed.

In another embodiment of the invention said first facilities take the form of an electrically operated power means which will consequently switch the valve of the first valve means from an open to a closed position when the vehicle's speed is above the threshold speed, and the opposite when it is below, so that when the system is operating the first valve means will always be in the stable state which is desirable at the prevailing vehicle speed, and will always be in the desired position upon the occurrence of a malfunction of the system, e.g. loss of electricity supply to the system and hence also to the electrically operated power means.

In another embodiment of the invention the first and/or second valve means each comprise a check valve and, connected in parallel therewith, a bypass line for defining closed and open positions by connecting the check valve and the bypass line respectively in said alternative feedback line, thus providing a simple way of achieving reliable operation of the arrangement for switching the steering unit to the two fail-safe states with inactivated power device, i.e. without active steering of the tag axle's wheels.

In another embodiment of the invention the system comprises in said ordinary feedback line from the respective piston side of the power cylinder a pilot valve means for closing this line when the pump is not being run by the power device. The provision of such a pilot valve means, i.e. a load maintenance valve, in the feedback line from the respective piston side of the power cylinder affords assurance that the tag axle's wheels will remain in said fixed neutral position when the power device is not running the pump, even in the event of such pressure pulses as may occur in the pressure medium lines when the power device is switched off or not running.

In another embodiment of the invention the pump is adapted to conveying pressure medium to said one piston side during rotation in one direction and to the other piston side during rotation in the opposite direction. This is a simple way of effecting the steering of the tag axle when the system is operating. Such steering thus becomes particularly easy in cases where the power device comprises an electric motor with a direction of rotation which can be reversed as desired to change the direction of the pump.

In another embodiment of the invention the pump is adapted to conveying a medium in the form of a hydraulic liquid, which is normally the most appropriate medium to supply to a said power cylinder in a system of this kind.

In another embodiment of the invention the steering unit is adapted, when the system is operating, to causing the power device to control the angle between the alignment of the tag axle's wheels and said vehicle's longitudinal direction relative to the angle between the alignment of the front axle's wheels and said longitudinal direction, so that at least from a predetermined speed of the vehicle the ratio between these angles decreases continuously, or step by step, with increasing vehicle speed until it reaches zero at said threshold speed.

In a further development of this embodiment, the steering unit is adapted, when the system is operating, to causing the power device, when the vehicle is below said predetermined speed, to cause the angle between the alignment of the tag axle's wheels and said longitudinal direction of the vehicle to be at a constant ratio to the angle between the alignment of the front axle's wheels and said longitudinal direction, e.g. 1:1, and said predetermined speed is 15-30 km/h, 20-30 km/h or 25 km/h. It is advantageous to have such so-called full steering of the tag axle's wheels up to a said predetermined speed, in order to achieve best possible manoeuvrability up to that speed, but thereafter gradually to decrease said ratio up to said threshold speed.

In another embodiment of the invention the steering unit is adapted, when the system is operating, to causing the power device to cease running the pump when the vehicle goes above a said threshold speed of 30-50 km/h, 35-45 km/h or 40 km/h, but to start running the pump again when the vehicle goes below said threshold speed. These threshold speed values are advantageous on the commonest types of heavy vehicles, e.g. trucks and buses.

In another embodiment of the invention the system comprises a means adapted to detecting the angle between the alignment of the tag axle's wheels and said longitudinal direction of the vehicle, and locking means adapted to responding to the occurrence of malfunctions when the vehicle is below said threshold speed, to subsequent caster steering of the tag axle in the first fail-safe state and to continued operation of said angle detection means, by locking the tag axle in said neutral position when the angle detection means indicates that said angle is zero. This means that in cases where the angle detection means continues to operate after the occurrence of a malfunction of the system and the assumption of the first fail-safe state, it will thus still be possible to reach said neutral position of the tag axle's wheels, which is more advantageous when the system malfunctions than the caster steering which occurs in the first fail-safe state.

In another embodiment of the invention the system is adapted to steering at least two said tag axles, and might very well be configured to steer even three or more tag axles.

The invention relates also to a method for switching a system for steering at least one unpowered wheeled tag axle of a vehicle, which axle in the vehicle's ordinary direction of movement follows after its front axle, to a fail-safe state when malfunctions occur within the system, according to the attached independent method claim. The results of applying such a method and the advantages arising from it are indicated with all desirable clarity by the above description of the system according to the invention.

The invention relates also to a computer programme which presents the features set out in claim 16, a computer programme product which presents the features set out in claim 17, an electronic control unit which presents the features set out in claim 18, and a vehicle according to claim 19.

Other advantageous features and advantages of the invention are indicated by the description set out below.

### BRIEF DESCRIPTION OF THE DRAWINGS

Embodiments of the invention cited by way of examples are described below with reference to the attached drawings, in which
- Fig. 1: is a simplified view illustrating a system for tag axle steering of a vehicle of the kind according to the invention,
- Figs. 2a-e: are greatly simplified views of part of possible tag axle wheel steering systems to which the invention is applicable,
- Fig. 3: is a pressure medium diagram of a system according to an embodiment of the invention when in an operating state with a vehicle moving at below a said threshold speed,
- Fig. 4: is a view corresponding to Fig. 3 when the vehicle is moving at above said threshold speed and the tag axle's wheels are in a fixed neutral position,
- Fig. 5: is a view corresponding to Fig. 3 and illustrating the medium flows in a first fail-safe state when a malfunction of the system has occurred in the state depicted in Fig. 3,
- Fig. 6: is a view corresponding to Fig. 5 and illustrating a second fail-safe state of the system which is reached when a malfunction of the system occurs in the state depicted in Fig. 4,
- Fig. 7: is a view corresponding to Fig. 3 of a pressure medium layout of a system according to a second embodiment of the invention, and
- Fig. 8: is a schematic diagram of an electronic control unit for implementing a method according to the invention.

### DETAILED DESCRIPTION OF EMBODIMENTS OF THE INVENTION

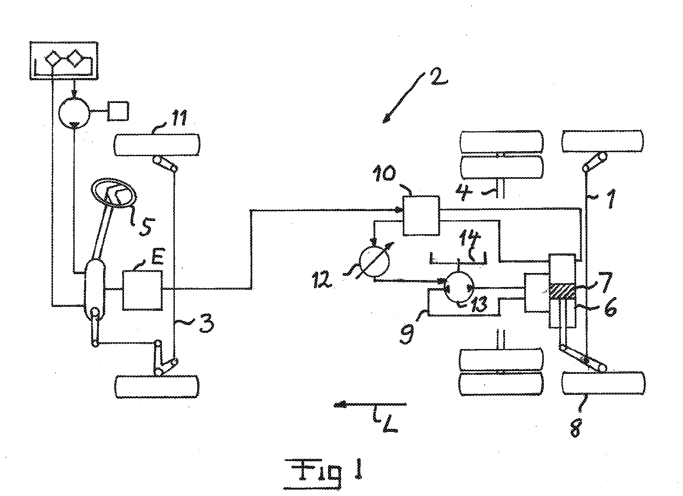

Fig. 1 illustrates very schematically a system for steering an unpowered wheeled tag axle 1 of a vehicle 2 in the form of a truck with a front axle 3 and a powered rear axle 4 situated ahead of the tag axle in the vehicle's ordinary direction of movement. The diagram illustrates schematically how the front axle 3 can in a conventional way be steered by connection to the vehicle's steering wheel 5. A power cylinder 6 is connected mechanically to the tag axle 1 in order via a piston 7 of the power cylinder to control the alignment of the tag axle's wheels 8 relative to the vehicle's longitudinal direction (arrow L). The diagram illustrates how pressure medium, normally in the form of hydraulic liquid, can be conveyed to and from the power cylinder via lines 9 in order to control the alignment of the tag axle's wheels. This conveying of medium is controlled by a schematically depicted steering unit 10 on the basis of information from the vehicle's electronic control unit E about the alignment of the front axle's wheels 11 relative to the vehicle's longitudinal direction L, and the speed of the vehicle. This general layout is typical of systems for steering a tag axle of a vehicle.

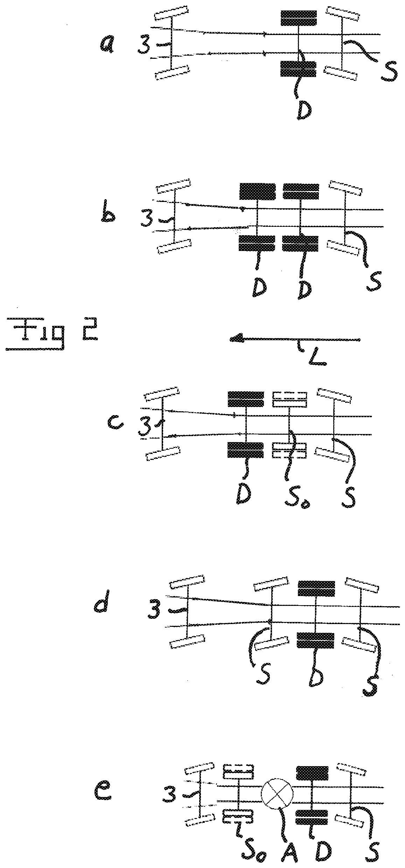

Figs. 2a-e illustrate part of the vehicle configurations to which a steering system of this kind is applicable, in which the arrow L denotes the vehicle's ordinary direction of movement, D denotes powered axles, S steered tag axles and S₀ unsteered tag axles. Figs. 2a-d illustrate configurations of trucks and Fig. 2e illustrates a configuration of a bus with an articulation A. These are only some of numerous possible configurations on which a system for steering according to the invention might be applied.

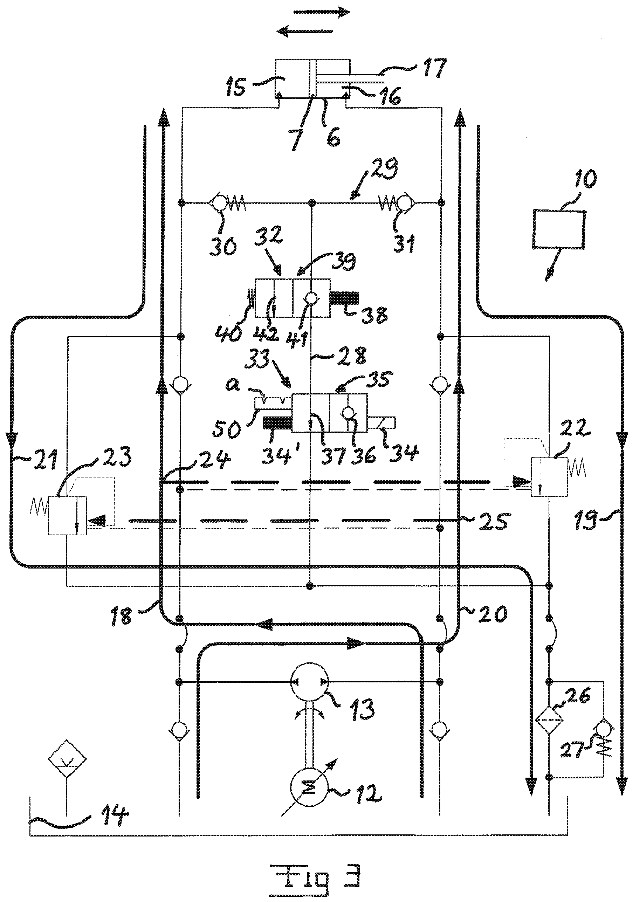

Fig. 3 illustrates a system according to the invention with a power device in the form of an electric motor 12 adapted to running a hydraulic pump 13 in order, by choice of direction of rotation for the motor, to convey hydraulic liquid under pressure from an oil container 14 to either of two opposite sides 15, 16 of the piston 7 of the power device in order to cause the piston to move and thereby alter the alignment of the tag axle's wheels as a result of the connection of the piston rod 17 to an undepicted steering arm adapted to turning said wheels (see also Fig. 1). The line path from the reservoir 14 to the piston side 15 is marked 18, and an ordinary feedback line from the piston side 16 is marked 19, while the line path from the reservoir 14 to the piston side 16 is marked 20 and an ordinary feedback line from the piston side 15 to the reservoir is marked 21. In the respective ordinary feedback lines 19, 21, pilot valve means 22 and 23 are provided to close the respective lines at times when there is insufficient hydraulic liquid pressure at respective points 24 and 25 on the line paths 18 and 20, i.e. when the pump 13 is not being run by the electric motor 12. In a conventional way, the feedback line is also provided with a filter 26 and, connected in parallel with it, a valve 27 which is adapted to opening if the filter becomes obstructed.

The system according to the invention for steering the wheels of a said tag axle further comprises an arrangement adapted to responding to the occurrence of malfunctions within the system by switching the system to a fail-safe state with inactivated device, i.e. with the electric motor not running. This arrangement is provided accordingly with an alternative feedback line 28 intended to convey hydraulic liquid to the reservoir 14 and connected to both sides 15, 16 of the power device's piston, and with an ancillary unit 29 situated in this feedback line and adapted to keeping the latter closed when the system is operating. Spring-loaded check valves 30, 31 connect the alternative feedback line to the respective ordinary feedback lines from the piston sides.

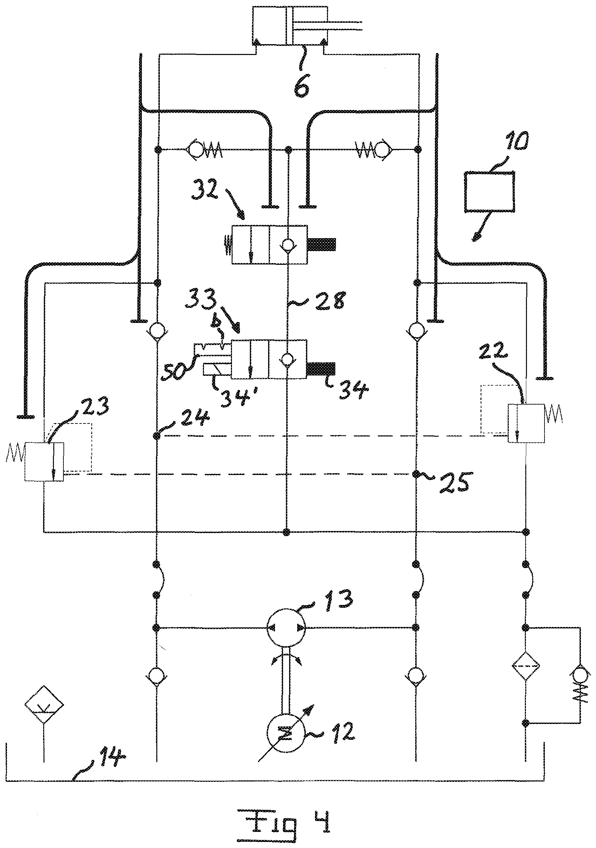

The ancillary unit 29 comprises a connection in series of two valve means 32, 33. A first valve means 33 is bistable and provided with first facilities 34, 34' in the form of two electrically operated power means which, when the system is operating, are adapted to causing a valve 35 of this valve means to assume either of two stable positions, depending on the vehicle's speed, comprising an open position when the vehicle is below a threshold speed, e.g. 40 km/h, and a closed position when the vehicle is above this threshold speed. The valve means 33 is provided accordingly with a check valve 36 and, connected in parallel therewith, a bypass line 37 for defining said closed and open positions by respectively connecting the check valve and the bypass line in the alternative feedback line 28. The power means 34, 34' thus automatically switch the first valve means 33 between the two stable positions when the vehicle is respectively above or below said threshold speed and the system is operating. Thus when the power means 34' is active (as in Fig. 3) it switches the bypass line 37 to become connected in the feedback line 28, whereas when the power means 34 is activated the check valve 36 is inserted in the line 28 (as in Fig. 4). A locking means 50 is provided to mechanically lock the first valve means 33 firmly in the respective bistable positions (symbolised by a and b respectively) so that they remain therein when there is loss of electricity supply to the power means 34, 34'.

The second valve means 32 is provided with second facilities in the form of an electrical power means 38 which is adapted, when in an energised state, to keeping a valve 39 of this valve means in a closed position and, when in a de-energised state, to allowing a spring means 40 to switch the valve 39 to an open position. The spring means 40 is thus adapted to constantly urging the valve towards the open position by spring loading, whereas the electrical power means 38 is adapted, when the system is operating, to counteracting the spring loading and keeping the valve in a closed position. This valve means likewise comprises a check valve 41 and, connected in parallel therewith, a bypass line 42 for defining respective closed and open positions by respectively connecting the check valve and the bypass line in the feedback line 28.

The operation of the system according to the invention will now be described with reference to Figs. 3 and 4. The steering unit 10 is adapted, when the system is operating, to using the electric motor 12 to control the angle between the alignment of the tag axle's wheels and the respective vehicle's longitudinal direction relative to the angle between the alignment of the front axle's wheels and said longitudinal direction, and the speed of the vehicle, so that from a predetermined speed of the order of 25 km/h the ratio between these angles decreases continuously, or step by step, with increasing vehicle speed until it reaches zero at a threshold speed of about 40 km/h. Accordingly, the steering unit is with advantage adapted, when the system is operating, to causing the electric motor 12, when the vehicle is below the predetermined speed, to cause the angle between the alignment of the tag axle's wheels and the longitudinal direction of the vehicle to be at a constant ratio to the angle between the alignment of the front axle's wheels and said longitudinal direction, so that at low speeds of the vehicle the tag axle has maximum steerability. The steering unit is therefore adapted, when said threshold speed is reached, to causing this ratio to become zero, i.e. the electric motor is kept inactivated when the vehicle is above the threshold speed, and the situation in Fig. 4 with the tag axle locked in neutral position is reached. This means that the pilot valve means 22, 23 will keep the ordinary feedback lines closed when there is insufficient pressure at the respective points 24 and 25. The alternative feedback line 28 will also be closed by the two valve means 32, 33 being in a closed position.

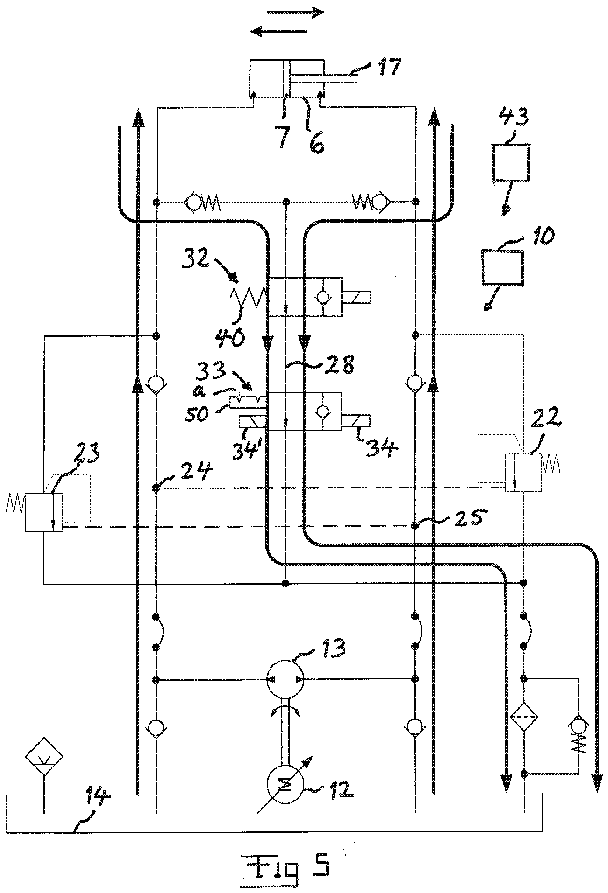

Fig. 5 illustrates what happens if a malfunction, e.g. an interruption of electricity supply or a malfunction of some component, occurs in the system when the vehicle is below said threshold speed, i.e. in the system's state depicted in Fig. 3. In this situation the electric motor 12 will be inactivated but the alternative feedback line 28 will open because at this low speed of the vehicle the first valve means 33 will be in the stable open position and the second valve means 32 will be switched to an open position by the spring means 40 upon cessation of the electricity supply to the electromagnetic valve 38. This means that the tag axle's wheels will be caster-steered, i.e. they will freely follow the vehicle's steering as a result of the piston 7 being allowed to move in the power cylinder 6 by hydraulic liquid being drawn in on one side of the latter and expelled from the space on its other side. A first fail-safe state of the system for steering the tag axle's wheels is thus reached. Fig. 5 illustrates very schematically how the system may also comprise a means 43 adapted to detecting the angle between the alignment of the tag axle's wheels and the longitudinal direction of the vehicle. The system has locking means adapted to responding to the occurrence of malfunctions when the vehicle is below said threshold speed, to the subsequent caster steering depicted in Fig. 5 of the tag axle in the first fail-safe state and to continued operation of the valve detection means 43, by locking the tag axle in said neutral position when the angle detection means indicates that said angle is zero. This locking means may take the form of some element which switches the first valve means 33 to the position depicted in Fig. 4, or quite simply of some component which is caused to lock mechanically in the fixed position the piston rod 17 or elements connected to the piston rod.

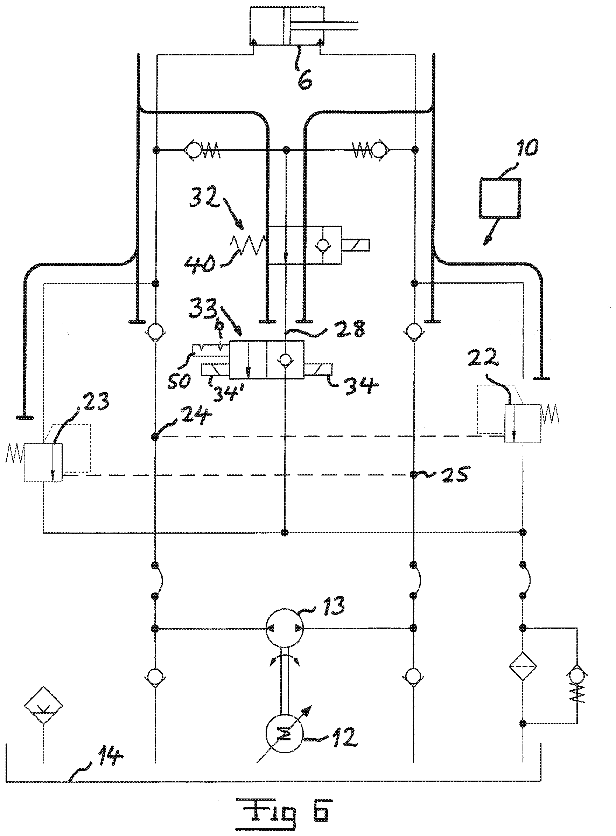

Fig. 6 illustrates what happens if a malfunction of the system occurs when the vehicle is above said threshold speed, i.e. when the system is operating as in Fig. 4. In this case the second valve means 32 will switch to open position, but the first valve means 33 will be in the stable closed position, ensuring that the alternative feedback line 28 is kept closed so that during continued movement of the vehicle the tag axle will be kept locked in the neutral position in a second fail-safe state of the system whatever the vehicle's speed thereafter may be.

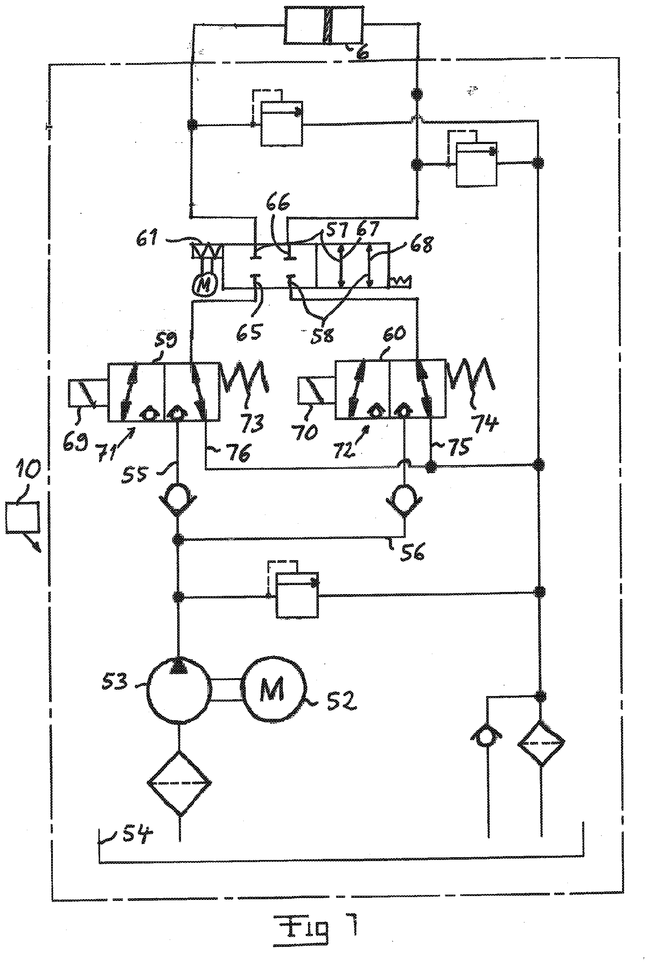

Fig. 7 illustrates a system according to a second embodiment of the invention with a power device in the form of a motor 52 intended to be able to cause a hydraulic pump 53 to convey hydraulic liquid under pressure from an oil container 54 in only one direction. Instead, there are two alternative paths 55, 56 for the hydraulic liquid to reach the power cylinder 6, and in each path a first bistable valve means 57, 58 is connected in series with a second valve means 59, 60. The first valve means 57, 58 are provided with a common first facility 61 in the form of an electrically operated valve means which, when the system is operating, is adapted to causing a valve of this valve means to assume either of two stable positions, depending on the vehicle's speed, viz. an open position when the vehicle is below said threshold speed and a closed position when the vehicle is above this threshold speed. Accordingly, the valve means 57, 58 are each provided with a check valve 65, 66 and, connected in parallel therewith, a bypass line 67, 68 for defining said respective closed and open positions by respectively connecting the check valve and the bypass line in the respective flow path.

The second valve means 59, 60 is provided with second facilities in the form of an electrical power means 69, 70 configured to be able, when in an energised state, to keep a valve 71, 72 of this valve means in a closed position or an open position and, when in a de-energised state, to allow a spring means 73, 74 to switch the valve to open position, as depicted in Fig. 7. The spring means 73, 74 is thus adapted to constantly urging the valve towards the open position by spring loading depicted in Fig. 7 and further explained below.

The operation of the system depicted in Fig. 7 will now be explained. The steering unit 10 is adapted, when the system is operating, to causing the motor 52 to control the angle between the alignment of the tag axle's wheels and the longitudinal direction of the respective vehicle relative to the angle between the alignment of the front axle's wheels and said longitudinal direction, and the speed of the vehicle, so that from a predetermined speed of the vehicle the ratio between these angles decreases continuously, or step by step, with increasing vehicle speed until it reaches zero at a threshold speed. In such steering the steering unit 10 is adapted, when the vehicle is below said threshold speed, to causing the electrical power means 69, 70 of the first valve means to determine the direction of the flow to the power cylinder, i.e. which of the paths 55 and 56 is to be chosen. If the first valve means 59 is caused to open against the action of the spring means 73, the hydraulic liquid will take the path 55 to the power cylinder. Hydraulic liquid will then flow back to the oil container via the first valve means 58 and the second valve means 60, which is caused to allow the spring means 74 to keep the feedback line 75 connected to the first valve means 58. If a malfunction now occurs, the spring means 73 will move the second valve means 59 to the position depicted in Fig. 7, thereby connecting the line 76 to the first valve means 57. This represents a first fail-safe state of the system in the form of the caster steering described above.

If the speed of the vehicle rises above said threshold speed, the electrical power means 61 will cause the first valve means 57, 58 to connect the check valves 65, 66 and thereby close to lock the tag axle in said neutral position. If a malfunction of the system now occurs, e.g. an interruption of electricity supply, the first valve means will cause the system to switch to a second fail-safe state in which the tag axle remains locked in said neutral position even if the vehicle subsequently drops below said threshold speed.

In this embodiment of the invention, when the system is operating during steering, one of the two second valve means 59, 60 will always be in a position which prevents pressure medium from flowing back from the power cylinder to the container 54 through the feedback line 76, 75 connected to it, which line is then to be regarded as the specifically applicable alternative feedback line. However, in the first fail-safe state, this alternative feedback line will be opened for caster steering. If we take it that hydraulic liquid is conveyed in the path 55 to the power cylinder 6 when the system is operating, then it will be returned to the container 54 via the feedback line 75. If a malfunction now occurs, the system will switch to the first fail-safe state and open for return of hydraulic liquid to the container 54 via the alternative feedback line 76. During steering in the opposite direction before the occurrence of the malfunction, the line 76 will instead be the ordinary feedback line, and the alternative feedback line 75 will be connected when the malfunction occurs.

Computer programme code for implementing a method according to the invention is with advantage included in a computer programme which can be read into the internal memory of a computer, e.g. the internal memory of an electronic control unit of a said system of a vehicle. Such a computer programme is with advantage provided via a computer programme product comprising a data storage medium which can be read by an electronic control unit and which has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

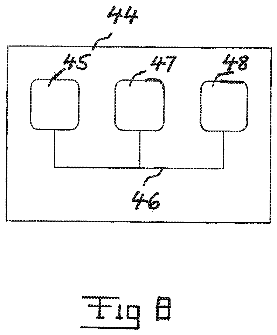

Fig. 8 illustrates very schematically an electronic control unit 44 comprising an execution facility 45, e.g. a central processor unit (CPU), for execution of computer software. The execution facility 45 communicates with a memory 46, e.g. of the RAM type, via a data bus 47. The control unit 44 comprises also a data storage medium 48, e.g. in the form of a flash memory or a memory of the ROM, PROM, EPROM or EEPROM type. The execution facility 45 communicates with the data storage medium 48 via the data bus 47. A computer programme comprising computer programme code for implementing a method according to the invention is stored on the data storage medium 48.

The invention is of course in no way restricted to the embodiments described above, as numerous possibilities for modifications thereof are likely to be obvious to one skilled in the art without thereby deviating from the scope of the invention such as is defined in the attached claims.

It would for example be possible to run the pump by means of some other power device than an electric motor, e.g. by some other kind of motor. Other flow-directing facilities than choice of direction of pump rotation would also be possible, e.g. a suitably configured valve block.

For the various check valves other than those given the reference notations 65 and 66 in Fig. 7, the symbol for seat valve is used in the drawings, but this is not to be construed as limiting the invention, since this symbol is here to be understood as possibly standing for any type of valve which operates according to the same basic principle.

## Claims

1. A system for steering at least one unpowered wheeled tag axle (1) of a vehicle (2) which in the latter's ordinary direction of movement follows after the vehicle's (2) front axle (3), comprising
• a power cylinder (6) connected mechanically to the tag axle (1) in order, via the position of its piston (7), to control the alignment of the tag axle's (1) wheels (8) relative to the longitudinal direction (L) of the vehicle (2),
• a pump (13, 53) adapted to conveying a medium under pressure from a medium reservoir (14, 54) optionally to either of two opposite sides (15, 16) of said piston (7) of the power cylinder (6) in order to cause the piston (7) to move and thereby alter said alignment of the tag axle's wheels (8), and back from the other of these sides in an ordinary feedback line (19, 21, 76, 75),
• a power device (12, 52) adapted to running the pump,
• a steering unit (10) adapted to controlling the device for control of said alignment of the tag axle's wheels (8) on the basis of information about the alignment of the front axle's wheels (11) relative to said longitudinal direction of the vehicle (2), and the speed of the vehicle (2), and to causing the tag axle's wheels (8) to assume a fixed neutral position aligned with said longitudinal direction when a threshold speed of the vehicle (2) is exceeded, and
• an arrangement adapted to responding to malfunctions within the system by switching the system to a fail-safe state with inactivated device (12, 52),
***characterised* in that** said arrangement comprises an alternative feedback line (28, 75, 76), connected to said both sides (15, 16) of the power cylinder's piston (7) in order to convey medium to the reservoir (14), and an ancillary unit (29) situated in this feedback line and adapted to keeping this line closed when the system is operating, and that the ancillary unit comprises a connection in series of two valve means (32, 33, 57, 59 and 58, 60) in the form of a first bistable valve means (33, 57, 58) provided with first facilities (34, 61) adapted, when the system is operating, to causing a valve (35) of the valve means to assume either of two stable positions, depending on the vehicle's speed, viz. an open position when the vehicle (2) is below said threshold speed and a closed position when the vehicle (2) is above said threshold speed, and with a second valve means (32, 59, 60) provided with second facilities (38, 40, 69, 70) adapted to switching a valve (39, 71, 72) of the valve means from closed to open position when a said malfunction occurs within the system, so that the ancillary unit (29) is adapted, if the vehicle (2) is below said threshold speed when a said malfunction occurs, to leading medium in the alternative feedback line (28, 75, 76) for caster steering of the tag axle (1) in a first fail-safe state but, if the vehicle speed is above said threshold speed when a said malfunction occurs, to keeping the tag axle (1) locked in said neutral position in a second fail-safe state.

2. A system according to claim 1, ***characterised* in that** said second facilities comprise spring means (40, 73, 74) adapted to constantly urging the valve (39, 71, 72) of the second valve means towards the open position by spring loading, and holding means (38, 69, 70) adapted, when the system is operating, to counteracting said spring loading and keeping the valve of the second valve means in a closed position but, when a malfunction occurs, to ceasing to resist the spring loading and thereby allowing the valve of the second valve means to be switched by spring force to a stable open position.

3. A system according to claim 2, ***characterised* in that** said holding means is an electrical power means, e.g. an electromagnetic valve (38, 69, 70) adapted, when in an energised state, to keeping the valve (39, 71, 72) of the second valve means in closed positions and, when in a de-energised state, to allowing the spring means (40, 73, 74) to switch the valve of the second valve means to open positions.

4. A system according to any one of the foregoing claims, ***characterised* in that** said first facilities comprise an electrically operated power means (34, 61).

5. A system according to any one of the foregoing claims, ***characterised* in that** the first and/or second valve means each comprise a check valve (36, 41) and, connected in parallel therewith, a bypass line (37, 42) for defining respective closed and open positions by respectively connecting the check valve and the bypass line in said alternative feedback line (28).

6. A system according to any one of the foregoing claims, ***characterised* in that** it comprises a pilot valve means (22, 23) in said ordinary feedback line (19, 21) from each piston side (15, 16) of the power cylinder (6) to close this line when the pump (13) is not being run by the power device (12).

7. A system according to any one of the foregoing claims, ***characterised* in that** the pump (13) is adapted to conveying medium to said one piston side when rotating in one direction and to the other piston side when rotating in the opposite direction.

8. A system according to any one of the foregoing claims, ***characterised* in that** the steering unit (10) is adapted, when the system is operating, to causing the power device (12, 52) to control the angle between the alignment of the tag axle's wheels (8) and said longitudinal direction (L) of the vehicle (2) relative to the angle between the alignment of the front axle's wheels (11) and said longitudinal direction, so that at least from a predetermined speed of the vehicle (2) the ratio between these angles decreases continuously, or step by step, with increasing vehicle speed until it reaches zero at said threshold speed.

9. A system according to any one of the foregoing claims, ***characterised* in that** the steering unit (10) is adapted, when the system is operating, to causing the power device (12, 52), when the vehicle's speed is below said predetermined speed, to cause the angle between the alignment of the tag axle's wheels (8) and said longitudinal direction (L) of the vehicle to be at a constant ratio to the angle between the alignment of the front axle's wheels (11) and said longitudinal direction, e.g. 1:1, and that said predetermined speed is 15-30 km/h, 20-30 km/h or 25 km/h.

10. A system according to any one of the foregoing claims, ***characterised* in that** the steering unit (10) is adapted, when the system is operating, to causing the power device (12, 52) to cease to run the pump (13) when the vehicle (2) goes above a said threshold speed of 30-50 km/h, 35-45 km/h or 40 km/h, but to start running the pump (13) again when the vehicle (2) goes below said threshold speed.

11. A system according to any one of the foregoing claims, ***characterised* in that** it comprises a means (43) adapted to detecting the angle between the alignment of the tag axle's wheels (8) and said longitudinal direction (L) of the vehicle (2), and that the system comprises locking means adapted to responding to malfunctions which occur when the vehicle (2) is below said threshold speed, to subconsequent caster steering of the tag axle (1) in the first fail-safe state and to continued operation of said angle detection means, by locking the tag axle (1) in said neutral position when the angle detection means (43) indicates that said angle is zero.

12. A wheeled vehicle, especially a motor vehicle and in particular a bus or a truck, ***characterised* in that** it is provided with a system according to any one of claims 1-11.

## Patentansprüche

1. System zum Steuern mindestens einer nicht angetriebenen Nachlaufachse (1) eines Fahrzeugs (2), die in gewöhnlicher Bewegungsrichtung des Letztgenannten der Frontachse (3) des Fahrzeugs (2) folgt, umfassend
• einen Arbeitszylinder (6), der mit der Nachlaufachse (1) mechanisch verbunden ist, um, durch die Position seines Kolbens (7), die Ausrichtung der Räder (8) der Nachlaufachse (1) relativ zu der Längsrichtung (L) des Fahrzeugs (2) zu steuern,
• eine Pumpe (13, 53), die dazu eingerichtet ist, ein Medium unter Druck von einem Mediumsreservoir (14, 54) optional zu einem der beiden gegenüberliegenden Seiten (15, 16) des Kolbens (7) des Arbeitszylinders (6) zu fördern, um den Kolben (7) zu veranlassen, sich zu bewegen und dadurch die Ausrichtung der Nachlaufachsenräder (8) zu verändern, und auch zurück von der jeweiligen anderen Seite in einer gewöhnlichen Rückführungsleitung (19, 21, 76, 75) zu fördern,
• eine Energieversorgungsvorrichtung (12, 52), die dazu eingerichtet ist, die Pumpe anzutreiben,
• eine Steuereinheit (10), die dazu eingerichtet ist, die Vorrichtung zur Steuerung der Ausrichtung der Nachlaufachsenräder (8) auf Basis von Information über die Ausrichtung der Frontachsenräder (11) relativ zu der Längsrichtung des Fahrzeugs (2) und der Geschwindigkeit des Fahrzeugs (2) zu steuern, und die Nachlaufachsenräder (8) dazu zu veranlassen, eine feste Neutralposition zu übernehmen, die nach der Längsrichtung ausgerichtet ist, wenn eine Grenzgeschwindigkeit des Fahrzeugs (2) überschritten ist, und
• eine Anordnung, die dazu eingerichtet ist, auf Fehlfunktionen innerhalb des Systems zu reagieren, indem das System in einen ausfallsicheren Zustand mit deaktivierter Vorrichtung (12, 52) geschalten wird,
**dadurch gekennzeichnet, dass** die Anordnung eine
alternative Rückführungsleitung (28, 75, 76) umfasst, die mit den beiden Seiten (15, 16) des Kolbens (7) des Arbeitszylinders verbunden ist, um ein Medium zu dem Reservoir (14) zu fördern, und
eine Hilfseinheit (29) umfasst, die in dieser Rückführungsleitung angeordnet ist und dazu eingerichtet ist, diese Leitung geschlossen zu halten, wenn das System arbeitet, und dass die Hilfseinheit eine Verbindung in Serie von zwei Ventilmitteln (32, 33, 57, 59 und 58, 60) umfasst,
wobei ein erstes in der Form eines bistabilen Ventilmittels (33, 57, 58) mit ersten Einrichtungen (34, 61) ausgestattet ist, die dazu eingerichtet sind, wenn das System in Betrieb ist, ein Ventil (35) der Ventilmittel zu veranlassen, eine von beiden stabilen Positionen abhängig von der Fahrzeuggeschwindigkeit zu übernehmen, nämlich eine offene Position, wenn das Fahrzeug (2) unterhalb der Grenzgeschwindigkeit des Fahrzeugs (2) ist, und eine geschlossene Position, wenn das Fahrzeug (2) oberhalb der Grenzgeschwindigkeit ist, und
wobei ein zweites Ventilmittel (32, 59, 60) mit zweiten Einrichtungen (38, 40, 69, 70) ausgestattet ist, die dazu eingerichtet sind, ein Ventil (39, 71, 72) der Ventilmittel von einer geschlossenen zu einer geöffneten Position zu schalten, wenn eine genannte Fehlfunktion im System auftritt, sodass die Hilfseinheit (29) dazu eingerichtet ist, wenn das Fahrzeug (2) unterhalb der Grenzgeschwindigkeit ist und wenn eine genannte Fehlfunktionen auftritt, ein Medium in der alternativen Rückführungsleitung (28, 75, 76) zum Nachlaufsteuern der Nachlaufachse (1) in einem ersten ausfallsicheren Zustand zu führen, aber dann, wenn die Fahrzeuggeschwindigkeit oberhalb der Grenzgeschwindigkeit ist und wenn eine der genannten Fehlfunktion auftritt, die Nachlaufachse (1) in der neutralen Position in einem zweiten ausfallsicheren Zustand zu halten.

2. System nach Anspruch 1, **dadurch gekennzeichnet, dass** die zweiten Einrichtungen Federelemente (40, 73, 74), die dazu eingerichtet sind, das Ventil (39, 71, 72) des zweiten Ventilmittels in Richtung der offenen Position durch Federbelastung zu bewegen, und Haltemittel (38, 69, 70) umfassen, die dazu eingerichtet sind, wenn das System in Betrieb ist, der Federkraft entgegenzuwirken und das Ventil des zweiten Ventilmittels in einer geschlossenen Position zu halten, aber dann, wenn eine Fehlfunktion auftritt, das Drücken gegen die Federkraft zu beenden und es dadurch zu ermöglichen, dass das Ventil des zweiten Ventils es ermöglicht, mittels Federkraft in eine stabile offene Position geschaltet zu werden.

3. System nach Anspruch 2, **dadurch gekennzeichnet, dass** das Haltemittel ein elektrisches Arbeitsmittel ist, beispielsweise ein elektromagnetisches Ventil (38, 69, 70), das dazu eingerichtet ist, wenn es in einem angeregten Zustand ist, das Ventil (39, 71, 72) des zweiten Ventilmittels in geschlossener Position zu halten, und dann, wenn es in einem nicht angeregten Zustand ist, es den Federmitteln (40, 73, 74) zu ermöglichen, das Ventil des zweiten Ventilmittels in offene Positionen zu schalten.

4. System nach einem der vorhergehenden Ansprüche, **dadurch gekennzeichnet, dass** die ersten Einrichtungen ein elektrisch gesteuertes Arbeitsmittel (34, 61) umfassen.

5. System nach einem der vorhergehenden Ansprüche, **dadurch gekennzeichnet, dass** das erste und/oder zweite Ventilmittel jeweils ein Prüfventil (36, 41) und, parallel dazu verlaufend, eine Bypassleitung (37, 42) zur Definition jeweiliger geschlossener und offener Positionen umfasst, indem jeweils das Prüfventil und die Bypassleitung in der alternativen Rückführungsleitung (28) angeschlossen werden.

6. System nach einem der vorhergehenden Ansprüche, **dadurch gekennzeichnet, dass** es ein Steuerventilmittel (22, 23) in der gewöhnlichen Rückführungsleitung (19, 21) von jeder Kolbenseite (15, 16) des Arbeitszylinders (6) umfasst, um diese Leitung zu schließen, wenn die Pumpe (13) nicht durch die Energieversorgungsvorrichtung (12) angetrieben wird.

7. System nach einem der vorhergehenden Ansprüche, **dadurch gekennzeichnet, dass** die Pumpe (13) dazu eingerichtet ist, ein Medium zu der einen Kolbenseite, wenn sie in einer Richtung dreht, und zu der anderen Kolbenseite zu befördern, wenn sie in der gegensätzlichen Richtung dreht.

8. System nach einem der vorhergehenden Ansprüche, **dadurch gekennzeichnet, dass** die Steuereinheit (10) dazu eingerichtet ist, wenn das System in Betrieb ist, die Energieversorgungsvorrichtung (12, 52) dazu zu veranlassen, den Winkel zwischen der Ausrichtung der Nachlaufachsenräder (8) und der Längsrichtung (L) des Fahrzeugs (2) relativ zu dem Winkel zwischen der Ausrichtung der Frontachsenräder (11) und der Längsrichtung zu steuern, sodass zumindest ab einer vorgegebenen Geschwindigkeit des Fahrzeugs (2) das Verhältnis zwischen diesen Winkeln kontinuierlich, oder Schritt für Schritt, mit zunehmender Fahrzeuggeschwindigkeit abnimmt, bis es den Wert null zur Grenzgeschwindigkeit erreicht.

9. System nach einem der vorhergehenden Ansprüche, **dadurch gekennzeichnet, dass** die Steuereinheit (10) dazu eingerichtet ist, wenn das System in Betrieb ist, die Energieversorgungsvorrichtung (12, 52) dazu zu veranlassen, wenn die Fahrzeuggeschwindigkeit unterhalb der vorgegebenen Geschwindigkeit ist, den Winkel zwischen der Ausrichtung der Nachlaufachsenräder (8) und der Längsrichtung (L) des Fahrzeugs dazu zu veranlassen, in einem konstanten Verhältnis zu dem Winkel zwischen der Ausrichtung der Frontachsenräder (11) und der Längsrichtung, beispielsweise 1:1, zu sein, und dass die vorgegebene Geschwindigkeit 15-30 km/h, 20-30 km/h oder 25 km/h beträgt.

10. System nach einem der vorhergehenden Ansprüche, **dadurch gekennzeichnet, dass** die Steuereinheit (10) dazu eingerichtet ist, wenn das System in Betrieb ist, die Energieversorgungsvorrichtung (12, 52) dazu zu veranlassen, das Antreiben der Pumpe (13) zu beenden, wenn das Fahrzeug (2) sich oberhalb der Grenzgeschwindigkeit von 30-50 km/h, 35-45 km/h oder 40 km/h bewegt, aber das Betreiben der Pumpe (13) erneut zu starten, wenn das Fahrzeug (2) sich unterhalb der Grenzgeschwindigkeit bewegt.

11. Verfahren nach einem der vorhergehenden Ansprüche, **dadurch gekennzeichnet, dass** es ein Mittel (43) umfasst, das dazu eingerichtet ist, den Winkel zwischen der Ausrichtung der Nachlaufachsenräder (8) und der Längsrichtung (L) des Fahrzeugs (2) zu ermitteln, und dass das System ein Arretierungsmittel umfasst, das dazu eingerichtet ist, auf Fehlfunktionen zu reagieren, die auftreten, wenn das Fahrzeug (2) unterhalb einer Grenzgeschwindigkeit ist, um folgend die Nachlaufachse (1) in dem ersten ausfallsicheren Zustand nachlaufzusteuern, und dazu eingerichtet ist, den Betrieb des Winkelerfassungsmittels fortzusetzen, indem die Nachlaufachse (1) in der neutralen Position gesperrt wird, wenn das Winkelerfassungsmittel (43) anzeigt, dass der Winkel null ist.

12. Fahrzeug ausgestattet mit Rädern, insbesondere ein motorisiertes Fahrzeug und insbesondere ein Bus oder ein Lastwagen, **dadurch gekennzeichnet, dass** es mit einem System nach einem der Ansprüche 1-11 ausgestattet ist.

## Revendications

1. Système pour diriger au moins un essieu trainé à roues non motorisées (1) d'un véhicule (2) qui dans la direction de déplacement ordinaire de ce dernier suit l'essieu avant (3) du véhicule (2), comprenant
• un vérin de puissance (6) relié mécaniquement à l'essieu trainé (1) pour commander, via la position de son piston (7), l'alignement des roues (8) de l'essieu trainé (1) par rapport à la direction longitudinale (L) du véhicule (2),
• une pompe (13, 53) adaptée pour transporter un milieu sous pression depuis un réservoir de milieu (14, 54) de manière facultative vers l'un des deux côtés opposés (15, 16) dudit piston (7) du vérin de puissance (6) afin d'amener le piston (7) à se déplacer et modifier ainsi ledit alignement des roues (8) de l'essieu trainé, et le renvoyer depuis l'autre de ces côtés dans une ligne de retour ordinaire (19, 21, 76, 75),
• un dispositif de puissance (12, 52) adapté pour faire fonctionner la pompe,
• une unité de direction (10) adaptée pour commander le dispositif de commande dudit alignement des roues (8) de l'essieu trainé sur la base d'informations concernant l'alignement des roues (11) de l'essieu avant par rapport à ladite direction longitudinale du véhicule (2), et la vitesse du véhicule (2), et pour amener les roues (8) de l'essieu trainé à adopter une position neutre fixe alignée avec ladite direction longitudinale lorsqu'une vitesse de seuil du véhicule (2) est dépassée, et
• un agencement adapté pour répondre à des dysfonctionnements dans le système en commutant le système dans un état de sécurité avec un dispositif inactivé (12, 52),
**caractérisé en ce que** ledit agencement comprend une ligne de retour alternative (28, 75, 76), reliée auxdits deux côtés (15, 16) du piston (7) du vérin de puissance afin de transporter le milieu vers le réservoir (14), et une unité auxiliaire (29) située dans cette ligne de retour et adaptée pour maintenir cette ligne fermée lorsque le système fonctionne, et **en ce que** l'unité auxiliaire comprend une connexion en série de deux moyens de vanne (32, 33, 57, 59 et 58, 60) sous la forme de premiers moyens de vanne bistable (33, 57, 58) munis de premiers aménagements (34, 61) adaptés, lorsque le système fonctionne, pour amener une vanne (35) des moyens de vanne à adopter l'une des deux positions stables, selon la vitesse du véhicule, à savoir une position ouverte lorsque le véhicule (2) est en dessous de ladite vitesse de seuil et une position fermée lorsque le véhicule (2) est au-dessus de ladite vitesse de seuil, et de seconds moyens de vanne (32, 59, 60) munis de seconds aménagements (38, 40, 69, 70) adaptés pour commuter une vanne (39, 71, 72) des moyens de vanne d'une position fermée à une position ouverte lorsque ledit dysfonctionnement survient dans le système, de sorte que l'unité auxiliaire (29) est adaptée, si le véhicule (2) est en dessous de ladite vitesse de seuil lorsque ledit dysfonctionnement survient, pour acheminer un milieu dans la ligne de retour alternative (28, 75, 76) pour diriger la chasse de l'essieu trainé (1) dans un premier état de sécurité mais, si la vitesse de véhicule est au-dessus de ladite vitesse de seuil lorsque ledit dysfonctionnement survient, pour maintenir l'essieu trainé (1) verrouillé dans ladite position neutre dans un second état de sécurité.

2. Système selon la revendication 1, **caractérisé en ce que** lesdits seconds aménagements comprennent des moyens ressort (40, 73, 74) adaptés pour pousser constamment la vanne (39, 71, 72) des seconds moyens de vanne vers la position ouverte par charge de ressort, et des moyens de maintien (38, 69, 70) adaptés, lorsque le système fonctionne, pour contrecarrer ladite charge de ressort et maintenir la vanne des seconds moyens de vanne dans une position fermée mais, lorsqu'un dysfonctionnement survient, pour cesser de résister à la charge de ressort et permettre ainsi à la vanne des seconds moyens de vanne d'être commutée par une force de ressort dans une position ouverte stable.

3. Système selon la revendication 2, **caractérisé en ce que** lesdits moyens de maintien sont des moyens de puissance électrique, par exemple une électrovanne (38, 69, 70) adaptée, lorsqu'elle est dans un état excité, pour maintenir la vanne (39, 71, 72) des seconds moyens de vanne dans des positions fermées et, lorsqu'elle est dans un état non excité, pour permettre aux moyens de ressort (40, 73, 74) de commuter la vanne des seconds moyens de vanne dans des positions ouvertes.

4. Système selon l'une quelconque des revendications précédentes, **caractérisé en ce que** lesdits premiers aménagements comprennent des moyens de puissance à commande électrique (34, 61).

5. Système selon l'une quelconque des revendications précédentes, **caractérisé en ce que** les premiers et/ou seconds moyens de vanne comprennent chacun un clapet anti-retour (36, 41) et, connectés en parallèle à celui-ci, une ligne de dérivation (37, 42) pour définir des positions fermée et ouverte respectives en reliant respectivement le clapet anti-retour et la ligne de dérivation dans ladite ligne de retour alternative (28).

6. Système selon l'une quelconque des revendications précédentes, **caractérisé en ce qu'**il comprend des moyens de vanne pilote (22, 23) dans ladite ligne de retour ordinaire (19, 21) à partir de chaque côté de piston (15, 16) du vérin de puissance (6) pour fermer cette ligne lorsque la pompe (13) n'est pas actionnée par le dispositif de puissance (12).

7. Système selon l'une quelconque des revendications précédentes, **caractérisé en ce que** la pompe (13) est adaptée pour transporter un milieu vers ledit premier côté de piston lorsqu'elle tourne dans une direction et vers l'autre côté de piston lorsqu'elle tourne dans la direction opposée.

8. Système selon l'une quelconque des revendications précédentes, **caractérisé en ce que** l'unité de direction (10) est adaptée, lorsque le système fonctionne, pour amener le dispositif de puissance (12, 52) à commander l'angle entre l'alignement des roues (8) de l'essieu trainé et ladite direction longitudinale (L) du véhicule (2) par rapport à l'angle entre l'alignement des roues (11) de l'essieu avant et ladite direction longitudinale, de sorte qu'au moins à partir d'une vitesse prédéterminée du véhicule (2) le rapport entre ces angles diminue de façon continue, ou pas à pas, avec l'augmentation de la vitesse de véhicule jusqu'à atteindre zéro à ladite vitesse de seuil.

9. Système selon l'une quelconque des revendications précédentes, **caractérisé en ce que** l'unité de direction (10) est adaptée, lorsque le système fonctionne, pour amener le dispositif de puissance (12, 52), lorsque la vitesse du véhicule est au-dessous de ladite vitesse prédéterminée, pour amener l'angle entre l'alignement des roues (8) de l'essieu trainé et ladite direction longitudinale (L) du véhicule à être à un rapport constant avec l'angle entre l'alignement des roues (11) de l'essieu avant et ladite direction longitudinale, par exemple 1:1, et **en ce que** ladite vitesse prédéterminée est de 15-30 km/h, 20-30 km/h ou 25 km/h.

10. Système selon l'une quelconque des revendications précédentes, **caractérisé en ce que** l'unité de direction (10) est adaptée, lorsque le système fonctionne, pour amener le dispositif de puissance (12, 52) à cesser de faire fonctionner la pompe (13) lorsque le véhicule (2) dépasse ladite vitesse de seuil de 30-50 km/h, 35-45 km/h ou 40 km/h, mais pour recommencer à faire fonctionner la pompe (13) lorsque le véhicule (2) passe au-dessous de ladite vitesse de seuil.

11. Système selon l'une quelconque des revendications précédentes, **caractérisé en ce qu'**il comprend des moyens (43) adaptés pour détecter l'angle entre l'alignement des roues (8) de l'essieu trainé et ladite direction longitudinale (L) du véhicule (2), et **en ce que** le système comprend des moyens de verrouillage adaptés pour répondre à des dysfonctionnements qui surviennent lorsque le véhicule (2) est au-dessous de ladite vitesse de seuil, pour diriger ensuite la chasse de l'essieu suiveur (1) dans le premier état de sécurité et pour faire fonctionner en continu lesdits moyens de détection d'angle, en verrouillant l'essieu trainé (1) dans ladite position neutre lorsque les moyens de détection d'angle (43) indiquent que ledit angle est nul.

12. Véhicule à roues, en particulier un véhicule à moteur et notamment un bus ou un camion, **caractérisé en ce qu'**il est muni d'un système selon l'une quelconque des revendications 1 à 11.
